# EUROPÄISCHE PATENTSCHRIFT

(11) **EP 3 542 386 B1**
(45) Veröffentlichungstag und Bekanntmachung des Hinweises auf die Patenterteilung: **02.08.2023**
(21) Anmeldenummer: 17805130.6
(22) Anmeldetag: 13.11.2017
(51) Int. Cl.: H01H 9/40, H01H 9/54, H02H 3/02, H02H 3/08

(54) **NIEDERSPANNUNGS-SCHUTZSCHALTGERÄT**
LOW-VOLTAGE CIRCUIT BREAKER DEVICE
DISJONCTEUR BASSE TENSION

(30) Priorität: 15.11.2016 DE 102016121835
(43) Veröffentlichungstag der Anmeldung: 25.09.2019
(73) Patentinhaber: Eaton Intelligent Power Limited, Dublin 4 (IE)
(72) Erfinder: ASKAN, Kenan, 1090 Wien (AT)
(74) Vertreter: Epping - Hermann - Fischer
(86) Internationale Anmeldenummer: PCT/EP2017/079080
(87) Internationale Veröffentlichungsnummer: WO 2018/091418

(56) Entgegenhaltungen:
- EP-A1- 2 866 242
- WO-A1-2009/138603
- WO-A1-2011/057675
- WO-A1-2015/028634
- DE-A1- 3 622 098
- FR-A1- 2 579 007
- JP-A- H11 234 894
- US-A- 4 883 931
- US-A1- 2015 002 977

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. Derartige Schaltgeräte arbeiten zufolge des sog. Zero Voltage Switching. Beim Ausschalten des Schutzschaltgeräts wird dabei erst der Bypassschalter geöffnet, wobei ein Lichtbogen entsteht, und der Strom auf die Halbleiterschaltungsanordnung kommutiert.

Dies ist mit dem Nachteil verbunden, dass es dabei stets zu einer Belastung der Kontakte des Bypassschalters kommt, welche mit jedem Schaltvorgang abgenutzt werden. Weiters wird dabei die Halbleiterschaltungsanordnung stark beansprucht, da der Strom beim Übergang vom Bypassschalter auf die Halbleiterschaltungsanordnung im Falle eines ansteigenden Kurzschlussstromes bereits sehr hoch ist, und die Halbleiterschaltungsanordnung plötzlich mit diesem hohen Strom belastet wird. Dadurch werden entscheidende Bauteile des Schutzschaltgeräts bei jedem Ausschaltvorgang, insbesondere beim sicherheitsrelevanten Schalten eines Kurzschlussstromes, sehr stark belastet, wodurch die Lebensdauer des Schutzschaltgeräts eingeschränkt wird.

Aus dem Bereich der Energieverteilung bzw. des Energietransportes im Hoch- bzw. Mittelspannungsbereich ist ein Konzept einer hybriden Schutzvorrichtung aus der WO 2011/057675 A1 bekannt, welches einen Hochgeschwindigkeitsbypassschalter aufweist, zu welchem seriell ein Halbleiterschalter angeordnet ist.

Die US 2015/0002977 A1 offenbart eine Hochspannungs-Schutzanlage.

Aus der US 4 883 931 bzw. der EP 2 866 242 A1 gehen lediglich unterschiedliche Konzepte mechanischer Schalter mit Doppelunterbrechung hervor.

Weiters sind aus der DE 36 22 098 A1 ein lichtbogenloser Stromschalter, aus der FR 2579 007 A1 ein Hybridschalter und aus der WO 2009/138603 A1 ein hybrider Elektromechanischer/Halbleiterschutzschalter bekannt.

Aufgabe der Erfindung ist es daher ein Schutzschaltgerät der eingangs genannten Art anzugeben, mit welcher die genannten Nachteile vermieden werden können, welches eine geringe Baugröße aufweist, und welches über eine lange Zeit eine hohe Zuverlässigkeit aufweist. Erfindungsgemäß wird dies durch die Merkmale des Patentanspruches 1 erreicht.

Dadurch kann ein Schutzschaltgerät gebildet werden, welches eine geringe Baugröße aufweist, und welches über eine lange Zeit eine hohe Zuverlässigkeit aufweist.

Durch die Mehrfachunterbrechung beim Bypassschalter kann schneller ein für die Abschaltung eines Kurzschlusses erforderlicher Kontaktabstand erreicht werden. Durch die Mehrfachunterbrechung beim Bypassschalter werden Mehrfachlichtbögen mit mehreren Lichtbogenspannungen erzeugt, wodurch die Kommutierungszeit kleiner wird. Durch die Mehrfachunterbrechung kann das Volumen und die Masse des Bypassschalters verringert werden. Dadurch kann die Massenträgheit und die Kontaktöffnungszeit verringert werden. Durch die Verringerung der Kontaktöffnungszeit kann schneller der erforderliche sichere Kontaktabstand erreicht werden, um ein Abschalten eines Kurzschlussstromes durch die Leistungshalbleiter der ersten Halbleiterschaltungsanordnung zu ermöglichen. Dadurch kann die Belastung der ersten Halbleiterschaltungsanordnung verringert werden, welche während der Zeit, welche der Bypassschalter zum Erreichen des sicheren Kontaktabstandes benötigt, um ein erneutes Zünden des Lichtbogens an den Kontakten des Bypassschalters zu verhindern, einer sehr hohen Belastung ausgesetzt sind. Durch das schnellere Erreichen dieses sicheren Abstandes der Kontakte des Bypassschalters können weiters in der ersten Halbleiterschaltungsanordnung geringer belastbare Leistungshalbleiter vewendet werden. Derartige Leistungshalbleiter weisen sowohl einen geringeren Innenwiderstand, als auch eine geringere physische Baugröße auf, als höher belastbare Leistungshalbleiter. Durch die geringere Baugröße, insbesondere die kürzeren Wege innerhalb der Leistungshalbleiter kann die Schleifeninduktanz des Schutzschaltgeräts verringert werden, wodurch weiters direkt die Kommutierungszeit des Kurzschlussstromes auf die erste Halbleiterschaltungsanordnung verringert werden kann. Durch den geringeren Innenwiderstand wird die Kommutierungszeit weiters verringert.

Allerdings hat sich gezeigt, dass bei realen Ausführungen des Bypassschalters mit Mehrfachunterbrechung die Kontakte niemals ganz genau gleichzeitig öffnen. Bei zeitlich sehr fein aufgelöster Beobachtungszeit konnte festgestellt werden, dass in der Regel eines der Kontaktpaare aus beweglichem und gehäusefestem Kontakt den Öffnungs- bzw- Trennungsvorgang vor dem wenigstens einen weiteren Kontaktpaar bedingt. Dadurch muss während dieser Zeitspanne der gesamte, sich aufbauende bzw. ansteigende Kurzschlussstrom von lediglich einem Kontaktpaar getragen werden, welches dazu jedoch nicht ausgelegt ist. Dies führt nicht nur zu einer hohen Belastung dieses Kontaktes, sondern weiters zu einer Verschlechterung bzw. Verlängerung der Kommutierungszeit und folglich auch zu einer Vergrößerung der Belastung der Leistungshalbleiter der ersten Halbleiterschaltungsanordnung.

Da durch die zweite Halbleiterschaltungsanordnung der Strom bereits ohne Kontaktbewegung des Bypassschalters zur ersten Halbleiterschaltungsanordnung kommutiert, können die Kontakte des Bypassschalters schwächer und damit auch mit geringeren Massen ausgelegt werden, wodurch diese geringere Trägheit aufweisen und schneller geöffnet werden können. Die Kontakte können dadurch auch mehr hinsichtlich deren Widerstand optimiert werden, und müssen geringer thermisch belastbar sein.

Durch die zweite Halbleiterschaltungsanordnung kann sowohl die Belastung des Bypassschalters als auch der Halbleiterschaltungsanordnung verringert werden. Dadurch kann erreicht werden, dass der Strom bereits bei deutlich geringerer Stromstärke als bei herkömmlichen Schutzschaltgeräten auf die Halbleiterschaltungsanordnung kommutiert, wodurch die Belastung der Halbleiterschaltungsanordnung verringert und deren Lebensdauer vergrößert werden kann. Dadurch stellen die Unterschiede im zeitlichen Öffnen der Kontakte des Bypassschalters kein Problem mehr dar. Dadurch kann das Auftreten eines Lichtbogens an dem Bypassschalter im Wesentlichen gänzlich vermieden werden, wodurch die Belastung der entsprechenden Schaltkontakte verringert und deren Lebensdauer vergrößert werden kann. Dadurch können die Vorteile der Mehrfachunterbrechung am Bypassschalter ohne Beeinträchtigung durch dessen Eigenheiten ausgenutzt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Schutzschaltgerät gemäß dem Stand der Technik, und
Fig. 2 ein Niederspannungs-Schutzschaltgerät gemäß der bevorzugten Ausführungsform der gegenständlichen Erfindung.

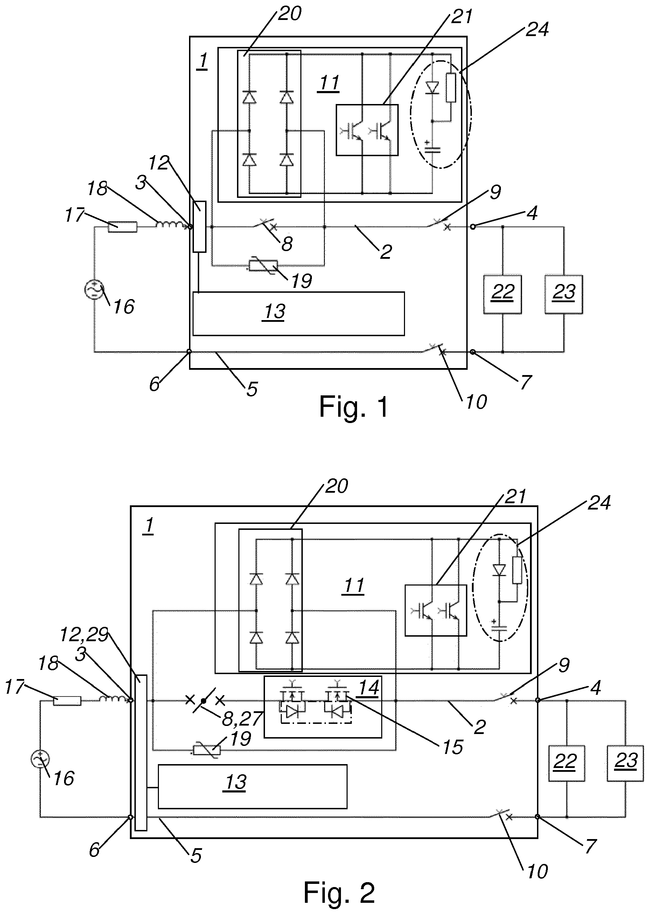

Die Fig. 2 zeigt ein Niederspannungs-Schutzschaltgerät 1 mit einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 und ein erster mechanischer Trennschalter 9 seriell angeordnet sind, wobei in der Neutralleiterstrecke 5 ein zweiter mechanischer Trennschalter 10 angeordnet ist, wobei eine erste Halbleiterschaltungsanordnung 11 des Niederspannungs-Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Niederspannungs-Schutzschaltgeräts 1 verbunden ist, wobei die elektronische Steuereinheit 13 dazu ausgebildet ist, den Bypassschalter 8, den ersten mechanischen Trennschalter 9, den zweiten mechanischen Trennschalter 10 und die erste Halbleiterschaltungsanordnung 11 bei Detektion eines vorgebbaren Überstromes, insbesondere eines Kurzschlussstromes, durch die Strommessanordnung 12 anzusteuern, wobei der Bypassschalter 8 als Schalter mit Mehrfachunterbrechung ausgebildet ist, und dass in der Außenleiterstrecke 2 eine zweite Halbleiterschaltungsanordnung 14 schaltungstechnisch seriell zum Bypassschalter 8 und parallel zur ersten Halbleiterschaltungsanordnung 11 angeordnet ist.

Dadurch kann ein Niederspannungs-Schutzschaltgerät 1 gebildet werden, welches eine geringe Baugröße aufweist, und welches über eine lange Zeit eine hohe Zuverlässigkeit aufweist.

Durch die Mehrfachunterbrechung beim Bypassschalter 8 kann schneller ein für die Abschaltung eines Kurzschlusses erforderlicher Kontaktabstand erreicht werden. Durch die Mehrfachunterbrechung kann das Volumen und die Masse des Bypassschalters 8 verringert werden. Dadurch kann die Massenträgheit der bewegten Teile und die Kontaktöffnungszeit verringert werden. Durch die Verringerung der Kontaktöffnungszeit kann schneller der erforderliche sichere Kontaktabstand erreicht werden, um ein Abschalten eines Kurzschlussstromes durch die Leistungshalbleiter 21 der ersten Halbleiterschaltungsanordnung 11 zu ermöglichen. Dadurch kann die Belastung der ersten Halbleiterschaltungsanordnung 11 verringert werden, welche während der Zeit, welche der Bypassschalter 8 zum Erreichen des sicheren Kontaktabstandes benötigt, um ein erneutes Zünden des Lichtbogens an den Kontakten des Bypassschalters 8 zu verhindern, einer sehr hohen Belastung ausgesetzt sind. Durch das schnellere Erreichen dieses sicheren Abstandes der Kontakte des Bypassschalters 8 können weiters in der ersten Halbleiterschaltungsanordnung 11 geringer maximalbelastbare Leistungshalbleiter 20, 21 vewendet werden. Derartige Leistungshalbleiter 20, 21 weisen sowohl einen geringeren Innenwiderstand, als auch eine geringere physische Baugröße auf, als höher belastbare Leistungshalbleiter 20, 21. Durch die geringere Baugröße, insbesondere die kürzeren Wege innerhalb der Leistungshalbleiter 21 kann die relevante Schleifeninduktanz des Niederspannungs-Schutzschaltgeräts 1 verringert werden, wodurch weiters direkt die Kommutierungszeit des Kurzschlussstromes auf die erste Halbleiterschaltungsanordnung 11 verringert werden kann. Durch den geringeren Innenwiderstand wird die Kommutierungszeit weiters verringert.

Allerdings hat sich gezeigt, dass bei realen Ausführungen des Bypassschalters 8 mit Mehrfachunterbrechung die Kontakte niemals ganz genau gleichzeitig öffnen. Bei zeitlich sehr fein aufgelöster Beobachtungszeit konnte festgestellt werden, dass in der Regel eines der Kontaktpaare aus beweglichem und bevorzugt gehäusefestem Kontakt den Öffnungs- bzw- Trennungsvorgang vor dem wenigstens einen weiteren Kontaktpaar begingt. Dadurch muss während dieser Zeitspanne der gesamte, sich aufbauende bzw. ansteigende Kurzschlussstrom von lediglich einem Kontaktpaar getragen werden, welches dazu jedoch nicht ausgelegt ist. Dies führt nicht nur zu einer hohen Belastung dieses Kontaktpaares, sondern weiters zu einer Verschlechterung bzw. Verlängerung der Kommutierungszeit und folglich auch zu einer Vergrößerung der Belastung der Leistungshalbleiter 20, 21 der ersten Halbleiterschaltungsanordnung 11.

Durch die zweite Halbleiterschaltungsanordnung 14 kann sowohl die Belastung des Bypassschalters 8 als auch der ersten Halbleiterschaltungsanordnung 11 verringert werden. Dadurch kann erreicht werden, dass der Strom bereits bei deutlich geringerer Stromstärke als bei herkömmlichen Schutzschaltgeräten gemäß Fig. 1 auf die erste Halbleiterschaltungsanordnung 11 kommutiert, wodurch die Belastung der ersten Halbleiterschaltungsanordnung 11 verringert und deren Lebensdauer vergrößert werden kann. Dadurch stellen die Unterschiede im zeitlichen Öffnen der Kontakte des Bypassschalters 8 kein Problem dar. Dadurch kann das Auftreten eines Lichtbogens an dem Bypassschalter 8 im Wesentlichen gänzlich vermieden werden, wodurch die Belastung der entsprechenden Schaltkontakte verringert und deren Lebensdauer vergrößert werden kann. Dadurch können die Vorteile der Mehrfachunterbrechung am Bypassschalter 8 ohne Beeinträchtigung durch dessen Eigenheiten ausgenutzt werden.

Durch die gegenständlichen Maßnahmen können weitere Vorteile erzielt werden. Da beim Abschalten kein Lichtbogen auftritt, muss auch kein Lichtbogen gelöscht werden. Es entstehen keine heißen ionisierten Gase, welche erst gekühlt werden müsste, um ein erneutes Zünden eines Lichtbogens zu verhindern. Dadurch kann sowohl die Belastbarkeit der ersten Halbleiterschaltungsanordnung 11 reduziert werden, als auch der gesamte Abschaltvorgang weiter beschleunigt werden, da ein erneutes Zünden eines Lichtbogens gegenständlich nicht mehr zu befürchten ist. Alternativ kann auch die Belastbarkeit der ersten Halbleiterschaltungsanordnung 11 unverändert bleiben und die Öffnungsgeschwindigkeit des Bypassschalters 8 reduziert werden, wodurch dieser einfacher ausgebildet werden kann.

Durch das schnelle Abschalten eines Kurzschluss- bzw- Überlaststromes wird weniger Energie als sonst in Form von Streuinduktivitäten bzw. in der Netzinduktanz gespeichert, wodurch der Überspannungsableiter 19 sowie der Snubber 24 geschont wird. Dieser kann aufgrund weiterer Effekte auch kleiner dimensioniert werden.

Da kein Schaltlichtbogen auftritt, ist der Spannungsabfall an der ersten Halbleiterschaltungsanordnung 11 nicht durch die Lichtbogenspannung limitiert.

Bei dem gegenständlichen Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Fig. 1 zeigt ein Schutzschaltgerät gemäß dem Stand der Technik, wie dieses etwa in der WO 2015/028634 A1 beschrieben ist. Dieses weist, wie auch das Schutzschaltgerät 1 gemäß Fig. 2 eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein herkömmlicher mechanischer Bypassschalter 8 mit einfacher Kontaktunterbrechung angeordnet. Bevorzugt und wie dargestellt, ist in der Außenleiterstrecke 2 weiters ein erster mechanischer Trennschalter 9, insbesondere seriell zum Bypassschalter 8, angeordnet. In der Neutralleiterstrecke 5 ist bevorzugt ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein Überspannungsableiter 19 geschaltet.

Das Schutzschaltgerät 1 weist weiters eine Strommessanordnung 12 auf, welche in der Außenleiterstrecke 2 angeordnet ist, und welche bevorzugt umfassend einem Shunt-Widerstand ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die erste Halbleiterschaltungsanordnung 11, sowie vorzugsweise den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in den Fig. 1 und 2 dargestellt.

Die erste Halbleiterschaltungsanordnung 11 weist bevorzugt eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein.

In den Fig. 1 und 2 sind neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schaltgerät gemäß dem Stand der Technik, wie in Fig. 1 gezeigt, ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Bei einem gegenständlichen Niederspannungs-Schutzschaltgerät 1, wie dies als bevorzugte Ausführungsform in Fig. 2 dargestellt ist, ist vorgesehen, dass der Bypassschalter 8 als Schalter 27 mit Mehrfachunterbrechung ausgebildet ist. Das Bezugszeichen 27 bezeichnet dabei den Schalter mit Mehrfachunterbrechung, welcher die Funktion des Bypassschalters 8 erfüllt. Weiters ist in der Außenleiterstrecke 2 eine zweite Halbleiterschaltungsanordnung 14 schaltungstechnisch seriell zum Bypassschalter 8 und parallel zur ersten Halbleiterschaltungsanordnung 11 angeordnet. Dabei ist auch der Überspannungsableiter 19 parallel zum Bypassschalter 8 und der zweite Halbleiterschaltungsanordnung 14 geschaltet. Die zweite Halbleiterschaltungsanordnung 14 ist ebenfalls von der elektronische Steuereinheit 13 angesteuert.

Das gegenständliche Niederspannungs-Schutzschaltgerät 1, wie dies als bevorzugte Ausführungsform in Fig. 2 dargestellt ist, ist bis auf die beschriebenen Unterschiedes bevorzugt wie das Niederspannungs-Schutzschaltgerät 1 gemäß Fig. 1 aufgebaut.

Der Schalter 27 mit Mehrfachunterbrechung weist wenigstens eine Doppelunterbrechung auf, wobei bevorzugt vorgesehen ist, dass der Schalter 27 mit Mehrfachunterbrechung umfassend wenigstens eine bewegliche Schaltbrücke mit wenigstens einem ersten und wenigstens einem zweiten beweglichen Kontakt ausgebildet ist. Der Schalter 27 ist in Fig. 2 schematisch dargestellt. Dabei kann weiters auch vorgesehen sein, dass der Schalter 27 mit Mehrfachunterbrechung auch eine Dreifachunterbrechung, eine Vierfachunterbrechung bzw. eine Fünffachunterbrechung aufweist. Schalter 27 mit Mehrfachunterbrechung und beweglichen Schaltbrücken sind an sich bekannt, weshalb gegenständlich nicht näher darauf eingegangen wird.

Die elektronische Steuereinheit 13 ist dazu vorgesehen bzw. entsprechend ausgebildet, den Bypassschalter 8, den ersten mechanischen Trennschalter 9, den zweiten mechanischen Trennschalter 10, die erste Halbleiterschaltungsanordnung 11 und die zweite Halbleiterschaltungsanordnung 14 bei Detektion eines vorgebbaren Überstromes, insbesondere eines Kurzschlussstromes, durch die Strommessanordnung 12 anzusteuern, um ein Abschalten des Schutzschaltgeräts 1 zu verursachen. Dabei ist bevorzugt vorgesehen, dass die elektronische Steuereinheit 13 dazu ausgebildet ist, bei Detektion eines Kurzschlussstromes durch die Strommessanordnung 12 zuerst die zweite Halbleiterschaltungsanordnung 14 zu sperren, nachfolgenden den Bypassschalter 8 zu öffnen, nachfolgend die erste Halbleiterschaltungsanordnung 11 in den nicht-leitenden Zustand zu steuern bzw. überzuführen, und nachfolgend den ersten mechanischen Trennschalter 9 und zweiten mechanischen Trennschalter 10 zu öffnen, wobei beim Ausschalten erst der erste mechanische Trennschalter 9 geöffnet wird, und nachfolgend der zweite mechanische Trennschalter 10. Durch den Betrieb in dieser Reihenfolge kann erreicht werden, dass der Strom bereits auf die erste Halbleiterschaltungsanordnung 11 kommutiert, wenn dieser noch sehr klein ist, wobei kein entsprechender Abfall, verbunden mit einem Lichtbogen an dem Bypassschalter 8 erforderlich ist. Die Mehrfachkontakte des Bypassschalters 8 öffnen daher bereits im stromlosen Zustand, weshalb kein Lichtbogen auftritt, und es aufgrund der unterschiedlichen Kontaktöffnung zu keinen Problemen kommt.

Nach dem Abschalten der IGBTs 21 wird die Spannung wegen der im Netz gespeicherten Energie steigen. Die steigende Spannung wird vom Überspannungsableiter 19 geleitet, welcher den Strom begrenzt. Wenn der Strom klein genug ist, werden der erste und zweite mechanische Trennschalter 9, 10 geöffnet.

Bevorzugt ist vorgesehen, dass die zweite Halbleiterschaltungsanordnung 14 bidirektional ausgebildet ist. Besonders bevorzugt ist die zweite Halbleiterschaltungsanordnung 14 als vier Quadranten-Schaltung ausgebildet, für beide Stromrichtungen und beide Spannungspolaritäten.

Weiters ist bevorzugt vorgesehen, dass die zweite Halbleiterschaltungsanordnung 14 umfassend Niederspanungs-MOSFET 15 ausgebildet ist. Die zweite Halbleiterschaltungsanordnung 14 befindet sich ständig im Stromfluss, weshalb der Innenwiderstand derselben relevant ist, um eine zu große Verlustleistung an dieser Stelle zu vermeiden. Nach dem Abschalten der zweiten Halbleiterschaltungsanordnung 14 kommutiert der Strom auf die erste Halbleiterschaltungsanordnung 11. Der Spannungsabfall über die zweite Halbleiterschaltungsanordnung 14 beträgt dabei lediglich einige Volt. Beim Ausschalten der ersten Halbleiterschaltungsanordnung 11 ist darauf zu achten, dass die Schaltkontakte des Bypassschalters 8, 27, bereits genügend Kontaktabstand erreicht haben, dass an der zweiten Halbleiterschaltungsanordnung 14 keine Spannung mehr anliegt.

Bevorzugt sind die Niederspanungs-MOSFET 15 als 20-30V MOSFET gewählt, aufgrund deren sehr geringen Innenwiderstandes, sowie um die Verlustleitung im regulären Betrieb gering zu halten. Der Spannungsabfall an den Niederspanungs-MOSFET 15 dient lediglich dazu den Strom zum Kommutieren auf die erste Halbleiterschaltungsanordnung 11 zu bringen.

Aufgrund der "intrinsic body diode" der MOSFET sind lediglich zwei derartige Niederspanungs-MOSFET 15 für einen bidirektionalen Schalter erforderlich. Durch die hohe Leitfähigkeit können hohe Ströme bei geringen Gate-Spannungen erreicht werden.

Die erste Halbleiterschaltungsanordnung 11 ist entsprechend belastbar ausgebildet, um die hohen Ströme und Spannungsspitzen bei einem Kurzschluss zu schalten. Die erste Halbleiterschaltungsanordnung 11 kann ausgeschaltet werden, sobald die Kontakte des Bypassschalters 8, 27 genügend Kontaktabstand aufweisen.

Die MOSFET 15 weisen jeweils eine Antiparallel-Diode 28 auf, welche auch als Monolithic Body Diode bezeichnet wird. Die betreffenden Dioden sind in Fig. 2 entsprechend in einem strichpunktierten Kasten dargestellt.

Beim Einschalten eines ausgeschalteten Niederspannungs-Schutzschaltgeräts 1 kann dieses zuvor aufgrund einer Kurzschlussabschaltung ausgeschaltet worden sein, sodass die Kontakte des Bypassschalters 8 geöffnet sind. Dabei kann der betreffende elektrische Fehler weiterhin vorhanden sein. Beim Schließen der Schaltkontakte des Bypassschalters 8 kommt es in der Regel zu einem sog. Prellen der Kontakte. Dabei wird jeweils kurzzeitig eine leitende Verbindung hergestellt und wieder unterbrochen bis ein mechanisch stabiler Zustand erreicht wird. Dies führt, vor allem bei bestehendem Kurzschluss zu einer hohen Belastung der Kontakte. Weiters besteht insbesondere beim Einschalten des Niederspannungs-Schutzschaltgeräts 1 bei bestehendem Kurzschluss die Gefahr der Beschädigung der zweiten Halbleiterschaltungsanordnung 14.

Bevorzugt ist daher vorgesehen, dass die elektronische Steuereinheit 13 dazu ausgebildet ist, beim Einschalten des ausgeschalteten Niederspannungs-Schutzschaltgeräts 1 bei geöffnetem Bypassschalter 8 und gesperrter erster und zweiter Halbleiterschaltungsanordnung 11, 14, erst den zweiten mechanischen Trennschalter 10 und nachfolgend den ersten mechanischen Trennschalter 9 zu schließen, nach zumindest einer vorgebbaren ersten Zeitdauer die erste Halbleiterschaltungsanordnung 11 einzuschalten, im Wesentlichen unmittelbar nachfolgend den Bypassschalter 8 zu schließen, nach einer vorgebbaren zweiten Zeitdauer die zweite Halbleiterschaltungsanordnung 14 einzuschalten und im Wesentlichen unmittelbar nachfolgend die erste Halbleiterschaltungsanordnung 11 auszuschalten.

Die erste Zeitdauer ist dabei derart lange, dass Schaltkontakte des ersten mechanischen Trennschalters 9 und Schaltkontakte des zweiten mechanischen Trennschalters 10 einen mechanisch stationären Zustand erreicht haben. Beim Einschalten eines Gleichstromes ist es ausreichend diese Zeit abzuwarten.

Zum Einschalten eines Wechselstromes ist bevorzugt vorgesehen, dass die elektronische Steuereinheit 13 dazu ausgebildet ist, nach Ablauf der ersten Zeitdauer die zweite Halbleiterschaltungsanordnung 14 beim nächsten Nulldurchgang der anliegenden Spannung einzuschalten. Zur Detektion des Nulldurchganges der anliegenden Spannung weist das Niederspannungs-Schutzschaltgerät 1 eine Spannungsmessanordnung 29 auf, welches mit der Steuereinheit 13 verbunden ist.

Die zweite Zeitdauer ist derart lange, dass Schaltkontakte des Bypassschalters 8 einen mechanisch stationären Zustand erreicht haben.

Durch die vorgenannten Maßnahmen kann das Niederspannungs-Schutzschaltgerät 1 eingeschaltet werden, ohne die einzelnen Bauteile übermäßigen Belastungen auszusetzen.

Durch die gegenständlichen Maßnahmen ergibt sich als weiterer Vorteil, dass es bei einem Schaltvorgang bei einem Defekt der ersten Halbleiterschaltungsanordnung 11 nicht zu einem Brand des Niederspannungs-Schutzschaltgeräts 1 kommt. Bei einem Niederspannungs-Schutzschaltgerät 1 gemäß Fig. 1 würde in diesem Fall der Bypassschalter 8 öffnen, woraufhin der entstehende Lichtbogen zu einem Brand des Bypassschalters 8 und folglich des gesamten Niederspannungs-Schutzschaltgeräts 1 führen würde. Dies ist bei dem gegenständlichen Niederspannungs-Schutzschaltgerät 1 gemäß Fig. 2 nicht der Fall. Aufgrund eines Avalanche- oder Lawinendurchbruches des bzw. der MOSFET 15 öffnet der Bypassschalter 8, 27 weiterhin ohne Lichtbogen, sodass ein Brand vermieden werden kann. Da es dabei zu einer Zerstörung der zweiten Halbleiterschaltungsanordnung 14 kommen kann, ist die zweite Halbleiterschaltungsanordnung 14 bevorzugt in einem Schutzgehäuse, insbesondere einem Metallgehäuse, innerhalb des Niederspannungs-Schutzschaltgeräts 1 gekapselt angeordnet.

## Patentansprüche

1. Niederspannungs-Schutzschaltgerät (1) mit mindestens einer Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1), wobei in der Außenleiterstrecke (2) ein mechanischer Bypassschalter (8) angeordnet ist, wobei eine erste Halbleiterschaltungsanordnung (11) des Niederspannungs-Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die erste Halbleiterschaltungsanordnung (11) bei Detektion eines vorgebbaren Überstromes, insbesondere eines Kurzschlussstromes, durch die Strommessanordnung (12) anzusteuern, wobei in der Außenleiterstrecke (2) eine zweite Halbleiterschaltungsanordnung (14) schaltungstechnisch seriell zum Bypassschalter (8) und parallel zur ersten Halbleiterschaltungsanordnung (11) angeordnet ist, wobei die zweite Halbleiterschaltungsanordnung (14) umfassend Niederspannungs-MOSFET (15) ausgebildet ist, wobei der Bypassschalter (8) als Schalter (27) mit Mehrfachunterbrechung ausgebildet ist, wobei der Schalter (27) mit Mehrfachunterbrechung wenigstens eine Doppelunterbrechung aufweist, **dadurch gekennzeichnet, dass** der Schalter (27) mit Mehrfachunterbrechung umfassend wenigstens eine bewegliche Schaltbrücke mit wenigstens einem ersten und wenigstens einem zweiten beweglichen Kontakt ausgebildet ist, dass das Niederspannungs-Schutzschaltgerät (1) eine Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1) aufweist ist und dass die Niederspannungs-MOSFET (15) als 20-30V MOSFET ausgebildet sind.

2. Niederspannungs-Schutzschaltgerät (1) nach Anspruch 1, **dadurch gekennzeichnet, dass** die zweite Halbleiterschaltungsanordnung (14) bidirektional, insbesondere als bidirektionaler 4-Quadrantennschalter, ausgebildet ist.

3. Niederspannungs-Schutzschaltgerät (1) nach Anspruch 1 oder 2, **dadurch gekennzeichnet, dass** in der Außenleiterstrecke (2) ein erster mechanischer Trennschalter (9), insbesondere seriell zum Bypassschalter (8), angeordnet ist, und dass die elektronische Steuereinheit (13) vorzugsweise dazu ausgebildet ist, den ersten mechanischen Trennschalter (9) zu betätigen.

4. Niederspannungs-Schutzschaltgerät (1) nach einem der Ansprüche 1 bis 3, **dadurch gekennzeichnet, dass** in der Neutralleiterstrecke (5) ein zweiter mechanischer Trennschalter (10) angeordnet ist, und dass die elektronische Steuereinheit (13) vorzugsweise dazu ausgebildet ist, den zweiten mechanischen Trennschalter (10) zu betätigen.

5. Niederspannungs-Schutzschaltgerät (1) nach Anspruch 3 und 4, **dadurch gekennzeichnet, dass** die elektronische Steuereinheit (13) dazu ausgebildet ist, bei Detektion eines Kurzschluss- und/oder Überlaststromes durch die Strommessanordnung (12) erst die zweite Halbleiterschaltungsanordnung (14) zu sperren, nachfolgenden den Bypassschalter (8) zu öffnen, nachfolgend die erste Halbleiterschaltungsanordnung (11) in den nicht-leitenden Zustand zu steuern, und nachfolgend den ersten mechanischen Trennschalter (9) und zweiten mechanischen Trennschalter (10) zu öffnen.

6. Niederspannungs-Schutzschaltgerät (1) nach den Ansprüchen 3 und 4 oder nach Anspruch 5, **dadurch gekennzeichnet, dass** die elektronische Steuereinheit (13) dazu ausgebildet ist, beim Einschalten des ausgeschalteten Niederspannungs-Schutzschaltgeräts (1) bei geöffnetem Bypassschalter (8) und gesperrter erster und zweiter Halbleiterschaltungsanordnung (11, 14), erst den zweiten mechanischen Trennschalter (10) zu schließen, nachfolgend den ersten mechanischen Trennschalter (9) zu schließen, nachfolgend nach zumindest einer vorgebbaren ersten Zeitdauer die erste Halbleiterschaltungsanordnung (11) einzuschalten, im Wesentlichen unmittelbar nachfolgend den Bypassschalter (8) zu schließen, nach einer vorgebbaren zweiten Zeitdauer die zweite Halbleiterschaltungsanordnung (14) einzuschalten und im Wesentlichen unmittelbar nachfolgend die erste Halbleiterschaltungsanordnung (11) auszuschalten.

7. Niederspannungs-Schutzschaltgerät (1) nach Anspruch 6, **dadurch gekennzeichnet, dass** die erste Zeitdauer derart lange ist, dass Schaltkontakte des ersten mechanischen Trennschalters (9) und Schaltkontakte des zweiten mechanischen Trennschalters (10) einen mechanisch stationären Zustand erreicht haben.

8. Niederspannungs-Schutzschaltgerät (1) nach Anspruch 7, **dadurch gekennzeichnet, dass** die elektronische Steuereinheit (13) dazu ausgebildet ist, beim Einschalten eines Wechselstromes nach Ablauf der ersten Zeitdauer die zweite Halbleiterschaltungsanordnung (14) beim nächsten Nulldurchgang der anliegenden Spannung einzuschalten.

9. Niederspannungs-Schutzschaltgerät (1) nach einem der Ansprüche 6 bis 8, **dadurch gekennzeichnet, dass** die zweite Zeitdauer derart lange ist, dass Schaltkontakte des Bypassschalters (8) einen mechanisch stationären Zustand erreicht haben.

## Claims

1. Low-voltage circuit breaker device (1) comprising at least one outer conductor section (2) from an outer conductor supply connection (3) of the low-voltage circuit breaker device (1) to an outer conductor load connection (4) of the low-voltage circuit breaker device (1), a mechanical bypass switch (8) being arranged in the outer conductor section (2), a first semiconductor circuit arrangement (11) of the low-voltage circuit breaker device (1) being connected in parallel with the bypass switch (8), a current measurement arrangement (12) being arranged in the outer conductor section (2), which current measurement arrangement is connected to an electronic control unit (13) of the circuit breaker device (1), the electronic control unit (13) being designed to actuate the bypass switch (8) and the first semiconductor circuit arrangement (11) when a predeterminable overcurrent, in particular a short-circuit current, is detected by the current measurement arrangement (12), a second semiconductor circuit arrangement (14) being arranged in the outer conductor section (2) so as to be in series with the bypass switch (8) and in parallel with the first semiconductor circuit arrangement (11) in terms of circuitry, the second semiconductor circuit arrangement (14) comprising low-voltage MOSFETs (15), and the bypass switch (8) being designed as a multi-break switch (27), the multi-break switch (27) having at least one double break, **characterized in that** the multi-break switch (27) comprises at least one movable switching bridge having at least one first and at least one second movable contact, **in that** the low-voltage circuit breaker device (1) has a neutral conductor section (5) from a neutral conductor connection (6) of the low-voltage circuit breaker device (1) to a neutral conductor load connection (7) of the low-voltage circuit breaker device (1), **and in that** the low voltage MOSFETs (15) are designed as 20-30V MOSFETs.

2. Low-voltage circuit breaker device (1) according to claim 1, **characterized in that** the second semiconductor circuit arrangement (14) is designed to be bidirectional, in particular as a bidirectional 4-quadrant switch.

3. Low-voltage circuit breaker device (1) according to either claim 1 or claim 2, **characterized in that** a first mechanical disconnecting switch (9) is arranged in the outer conductor section (2), in particular in series with the bypass switch (8), **and in that** the electronic control unit (13) is preferably designed to operate the first mechanical disconnecting switch (9).

4. Low-voltage circuit breaker device (1) according to any of claims 1 to 3, **characterized in that** a second mechanical disconnecting switch (10) is arranged in the neutral conductor section (5), **and in that** the electronic control unit (13) is preferably designed to operate the second mechanical disconnecting switch (10).

5. Low-voltage circuit breaker device (1) according to claim 3 and claim 4, **characterized in that** when a short-circuit and/or overload current is detected by the current measuring arrangement (12), the electronic control unit (13) is designed to first block the second semiconductor circuit arrangement (14), then open the bypass switch (8), then change the first semiconductor circuit arrangement (11) into the non-conductive state, and then open the first mechanical disconnecting switch (9) and the second mechanical disconnecting switch (10).

6. Low-voltage circuit breaker (1) according to claims 3 and 4 or according to claim 5, **characterized in that** when the switched-off low-voltage circuit breaker device (1) is switched on when the bypass switch (8) is open and the first and the second semiconductor circuit arrangement (11, 14) are blocked, the electronic control unit (13) is designed to first close the second mechanical disconnecting switch (10), then close the first mechanical disconnecting switch (9), then switch on the first semiconductor circuit arrangement (11) after at least one predeterminable first time period, to close the bypass switch (8) substantially immediately thereafter, to switch on the second semiconductor circuit arrangement (14) after a predeterminable second time period, and to switch off the first semiconductor circuit arrangement (11) substantially immediately thereafter.

7. Low-voltage circuit breaker device (1) according to claim 6, **characterized in that** the first time period is of such a length that switching contacts of the first mechanical disconnecting switch (9) and switching contacts of the second mechanical disconnecting switch (10) have reached a mechanically stationary state.

8. Low-voltage circuit breaker device (1) according to claim 7, **characterized in that** the electronic control unit (13) is designed to switch on the second semiconductor circuit arrangement (14) at the next zero crossing of the applied voltage when an alternating current is switched on after the first time period has elapsed.

9. Low-voltage circuit breaker device (1) according to any of claims 6 to 8, **characterized in that** the second time period is of such a length that switching contacts of the bypass switch (8) have reached a mechanically stationary state.

## Revendications

1. Disjoncteur basse tension (1) comportant au moins une section de conducteur externe (2) d'un raccord d'alimentation de conducteur externe (3) du disjoncteur basse tension (1) à un raccord de charge de conducteur externe (4) du disjoncteur basse tension (1), dans lequel un commutateur de dérivation mécanique (8) est agencé dans la section de conducteur externe (2), dans lequel un premier ensemble de circuit à semi-conducteur (11) du disjoncteur basse tension (1) est branché en parallèle au commutateur de dérivation (8), dans lequel un ensemble de mesure de courant (12) est agencé dans la section de conducteur externe (2), qui est connecté à une unité de commande électronique (13) du disjoncteur (1), dans lequel l'unité de commande électronique (13) est conçue pour commander le commutateur de dérivation (8) et le premier ensemble de circuit à semi-conducteur (11) lors de la détection d'une surintensité pouvant être prédéfinie, en particulier d'un courant de court-circuit, à travers l'ensemble de mesure de courant (12), dans lequel un second ensemble de circuit à semi-conducteur (14) est agencé dans la section de conducteur externe (2) selon la technique des circuits en série avec le commutateur de dérivation (8) et en parallèle avec le premier ensemble de circuit à semi-conducteur (11), dans lequel le second ensemble de circuit à semi-conducteur (14) est formé comprenant un MOSFET basse tension (15), dans lequel le commutateur de dérivation (8) est conçu comme un commutateur (27) à interruptions multiples, dans lequel le commutateur (27) à interruptions multiples présente au moins une double interruption, **caractérisé en ce que** le commutateur (27) à interruptions multiples est conçu comprenant au moins un pont de commutation mobile comportant au moins un premier et au moins un second contact mobile, **que** le disjoncteur basse tension (1) présente une section de conducteur neutre (5) d'un raccord de conducteur neutre (6) du disjoncteur basse tension (1) à un raccord de charge de conducteur neutre (7) du disjoncteur basse tension (1) et **que** les MOSFET basse tension (15) sont conçus comme des MOSFET à 20-30 V.

2. Disjoncteur basse tension (1) selon la revendication 1, **caractérisé en ce que** le second ensemble de circuit à semi-conducteur (14) est conçu comme un coupe-circuit bidirectionnel, en particulier bidirectionnel à 4 quadrants.

3. Disjoncteur basse tension (1) selon la revendication 1 ou 2, **caractérisé en ce qu'**un premier coupe-circuit mécanique (9) est agencé dans la section de conducteur externe (2), en particulier en série avec le commutateur de dérivation (8) **et que** l'unité de commande électronique (13) est de préférence conçue pour actionner le premier coupe-circuit mécanique (9).

4. Disjoncteur basse tension (1) selon l'une des revendications 1 à 3, **caractérisé en ce qu'**un second coupe-circuit mécanique (10) est agencé dans la section de conducteur neutre (5) **et que** l'unité de commande électronique (13) est de préférence conçue pour actionner le second coupe-circuit mécanique (10).

5. Disjoncteur basse tension (1) selon la revendication 3 et 4, **caractérisé en ce que** l'unité de commande électronique (13) est conçue, lors d'une détection d'un courant de court-circuit et/ou de surcharge à travers l'ensemble de mesure de courant (12), pour désactiver d'abord le second ensemble de circuit à semi-conducteur (14), pour ouvrir ensuite le commutateur de dérivation (8), pour commander ensuite le premier ensemble de circuit à semi-conducteur (11) dans l'état non conducteur et pour ouvrir ensuite le premier coupe-circuit mécanique (9) et le second coupe-circuit mécanique (10).

6. Disjoncteur basse tension (1) selon les revendications 3 et 4 ou selon la revendication 5, **caractérisé en ce que** l'unité de commande électronique (13) est conçue, lors de l'allumage du disjoncteur basse tension (1) éteint lorsque le commutateur de dérivation (8) est ouvert et que les premier et second agencements de circuit à semi-conducteur (11, 14) sont désactivés, pour fermer d'abord le second coupe-circuit mécanique (10), pour fermer ensuite le premier coupe-circuit mécanique (9), pour allumer ensuite après au moins une première durée pouvant être prédéfinie le premier ensemble de circuit à semi-conducteur (11), essentiellement immédiatement ensuite pour fermer le commutateur de dérivation (8), pour allumer après une seconde durée pouvant être prédéfinie le second ensemble de circuit à semi-conducteur (14) et essentiellement immédiatement ensuite pour éteindre le premier ensemble de circuit à semi-conducteur (11).

7. Disjoncteur basse tension (1) selon la revendication 6,
**caractérisé en ce que** la première durée est d'une longueur permettant aux contacts de commutation du premier coupe-circuit mécanique (9) et aux contacts de commutation du second coupe-circuit mécanique (10) d'atteindre un premier état stationnaire mécanique.

8. Disjoncteur basse tension (1) selon la revendication 7,
**caractérisé en ce que** l'unité de commande électronique (13) est conçue pour, lors de l'allumage d'un courant alternatif après l'expiration de la première durée, allumer le second ensemble de circuit à semi-conducteur (14) lors du prochain passage par zéro de la tension appliquée.

9. Disjoncteur basse tension (1) selon l'une des revendications 6 à 8, **caractérisé en ce que** la seconde durée est d'une longueur permettant aux contacts de commutation du commutateur de dérivation (8) d'atteindre un état stationnaire mécanique.
